# EUROPÄISCHE PATENTSCHRIFT

(11) **EP 1 343 953 B1**
(45) Veröffentlichungstag und Bekanntmachung des Hinweises auf die Patenterteilung: **24.06.2009**
(21) Anmeldenummer: 01980835.1
(22) Anmeldetag: 12.11.2001
(51) Int. Cl.: F01K 23/10

(54) **VERFAHREN ZUM ANFAHREN UND BELASTEN EINES KOMBIKRAFTWERKS**
METHOD FOR STARTING UP AND LOADING A COMBINED POWER PLANT
PROCEDE POUR METTRE EN MARCHE ET SOLLICITER UNE CENTRALE ELECTRIQUE COMBINEE

(30) Priorität: 13.11.2000 DE 10056231
(43) Veröffentlichungstag der Anmeldung: 17.09.2003
(73) Patentinhaber: Alstom Technology Ltd, 5400 Baden (CH)
(72) Erfinder: BLATTER, Richard, CH-8200 Schaffhausen (CH); MÜLLER, Peter, CH-8115 Hüttikon (CH); HEPNER, Stephan, CH-5628 Althäusern (CH)
(86) Internationale Anmeldenummer: PCT/IB2001/002133
(87) Internationale Veröffentlichungsnummer: WO 2002/038919

(56) Entgegenhaltungen:
- EP-A- 0 605 156
- EP-A- 0 768 449
- EP-A- 1 072 760
- DE-A- 19 518 093
- US-A- 5 203 160

## Beschreibung

### Technisches Gebiet

Die Erfindung betrifft ein Verfahren zum Betrieb eines Kombikraftwerks. Sie betrifft insbesondere ein Verfahren zum Anfahren und Belasten einer Kombianlage. Dieses Verfahren betrifft speziell die Leistungsregelung und die Aufteilung der Leistung innerhalb der Kombianlage beim Belasten der Kombianlage innerhalb eines energielosen Stromnetzes.

### Stand der Technik

Bei der Wiederinbetriebnahme eines energielosen Stromnetzes ("Black Grad") werden besondere Anforderungen an die Fähigkeiten einer Kraftwerksanlage zur schnellen Reaktion auf Lasttransienten und zur Frequenzstützung gestellt. Beim Auflasten eines Netzes und der sukzessiven Inbetriebnahme der Verbraucher steigt die Netzlast nicht stetig an, sondern etwa beim Zuschalten eines Industriebetriebes mit vielen elektromotorischen Verbrauchern kommt es zu Sprüngen der Effektivleistunganforderung wie auch der Blindleistungsanforderung von einigen 100 kW bis in die Megawatt-Grössenordnung. Wenn diese Lastsprünge auch absolut betrachtet klein sind, so müssen sie doch von einer einzigen Kraftwerksanlage erfüllt werden. Wenn dann die gesamte Leistungsaufnahme des Netzes nur bei einigen, beispielsweise 5, MW liegt, wird klar, welche Anforderungen an die Regelungsgüte und die Frequenzstützungsfähigkeit einer Kraftwerksanlage im unteren Teillastbereich unter diesen Bedingungen gestellt werden.

Prinzipiell können diese Anforderungen sehr gut durch eine Gästurbinenanlage erfüllt werden, welche an sich geringe Antwortzeiten hat. Gleichwohl hat die Entwicklung hin zum Einsatz der modernen und schadstoffarmen , Vormischbrennertechnologie in Gasturbinen zumindest im unteren Lastbereich zu einer Begrenzung der möglichen Lastgradienten aus Gründen der Flammenstabilität geführt. Daneben ist bei einigen Gasturbinen dieser modernen Bauarten ein Betrieb in gewissen Leistungsbändern von durchaus einigen MW Breite nicht möglich.

Somit müssen nach dem Stand der Technik in der Elektrizitätswirtschaft spezielle Einheiten bereitgehalten werden, die in der Lage sind, die Anforderungen beim Wiederanfahren eines energielosen Stromnetzes zu erfüllen. So können hier entsprechende Kapazitäten in Form von Peakr-Load-Gasturbinen und Dieselaggregaten bereitgehalten werden. Es handelt sich dabei aber häufig um vergleichsweise unwirtschaftliche und emissionsreiche Anlagen, die ansonsten nur geringe Betriebszeiten aufweisen. Um deren Startverfügbarkeit bei sehr seltenem Betrieb bis faktischem Dauerstillstand aufrechtzuerhalten, ist ein hoher Wartungsaufwand nötig. Zudem amortisieren sich die Investitionen nicht über verkauften Strom.

In der Summe ist die Bereithaltung der entsprechenden Reserven also nach dem Stand der Technik sehr aufwendig. Andererseits können Kraftwerksbetreiber gerade in liberalisierten Elektrizitätsmärkten von den Netzbetreibem hohe Geldbeträge für die Bereithaltung dieser Schwarzstartkapazitäten erhalten.

Aus EP-A-1 072 760 ist ein Verfahren zum Hochfahren eines Kombikraftwerkes bekannt, welches wenigstens eine Gasturbine und eine Dampfturbine umfasst, wobei mittels der heissen Abgase der Gasturbine in einem Abhitzekessel Frischdampf für den Betrieb der Dampfturbine erzeugt und der Dampfturbine zugeleitet wird. Die Fahrweise beim Start zeichnet sich dadurch aus, dass zur Verringerung des über einen Bypass strömenden Dampfüberschusses die Gasturbine zunächst auf ihre Minimallast hochgefahren wird, und dass die Gasturbine anschliessend mit einem Lastgradienten weiter hochgefahren wird. Der Anfahrvorgang und die Regelung der Gasturbine sind von den Zustandsgrössen der Dampfturbine beim Hochfahren und Belasten der Anlage abhängig. Dieses Dokument offenbart sämtliche Merkmale des Oberbegriffs des Anspruchs 1.

Aus EP-A-0 768 449 ist des Weiteren ein Verfahren zum Betrieb einer Kraftwerksantage bekannt bestehend im wesenttichen aus einer Gasturbogruppe, einer Dampfturbine und einem Abhitzedampferzeuger. Im Abhitzedampferzeuger wird zunächst eine erste Dampfmenge produziert, welche zur Beaufschlagung der Dampfturbine eingesetzt wird. Die hievon resultierende Leistung wird direkt oder indirekt in die Gasturbogruppe überführt und dient dort als Anfahrleistung zur Inbetriebsetzung der Gasturbogruppe, wobei hierzu weitere Aufheizvorgänge zum Einsatz kommen.

### Darstellung der Erfindung

Für die Kraftwerksbetreiber resultiert aus dem ober Gesagten der Wunsch, die entsprechenden Schwarzstartkapazitäten mit modernen, wirtschaftlichen, im Dauerbetrieb arbeitenden Anlagen bereitzustellen.

Aufgabe der vorliegenden Erfindung ist es daher, ein Verfahren anzugeben, welches es ermöglicht, mit einer Kombianlage, welche auf einer modernen, mit emissionsarmer Vormischbrennertechnologie ausgerüsteten Gasturbine basiert eine Frequenzstützungsfähigkeit bei beliebiger Anlagenlast bereitzustellen.

Erfindungsgemäss wird diese Aufgabe dadurch gelöst, dass bei einem Verfahren zum Betrieb eines Kombikraftwerks beim Anfahren eines energielosen Stromnetzes vor dem Belasten des Netzes ein Wasser-Dampf-Kreislauf energetisch aufgeladen und eine Dampfturbine angefahren wird, und die Gasturbine wenigstens in einem Teil ihres Lastbereiches gemäss eines vorgegebenen Lastprogrammes belastet wird, wobei transiente Lastanforderungen des Netzes durch Veränderungen der Dampfturbinenleistung erfüllt werden.

Unter der energetischen Aufladung des Wasser-Dampf-Kreislaufes ist in diesem Kontext beispielsweise die Aufheizung des Wasser-Dampf-Kreislaufes zu verstehen. Andererseits kann dies auch eine sukzessive Steigerung des Frischdampfdruckes im Kessel oder eine sukzessive Aufladung eines Behälters mit einem Dampfvolumen sein. Ein unter Druck stehendes Wasservolumen nahe der Siedetemperatur stellt ebenfalls ein sehr effizientes Energiereservoir dar, das bei einer Druckabsenkung spontan grosse Mengen Dampf bereitzustellen vermag. Im Normalfalle wird bei der Realisierung der Erfindungsidee eine Kombination dieser Möglichkeiten angewendet werden, wobei dem Fachmann auch durchaus andere Möglichkeiten geläufig sind, einen Wasser-Dampf-Kreislauf als Energiespeicher zu betreiben.

Kern der Erfindung ist es also, die Frischdampfzufuhr zur Dampfturbine nicht, wie nach dem Stand der Technik üblich, so zu regeln, dass die thermischen Spannungen in der Dampfturbine begrenzt werden, sondern die Frischdampfzufuhr tatsächlich auch in der Anfahrphase zur Leistungsregelung einzusehen. Dabei wird eine lebensdauerverkürzende mechanische Überlastung der Dampfturbine temporär bewusst in Kauf genommen. Gleichwohl tritt ein solches Ereignis in der Praxis nur selten ein, und die Wahrscheinlichkeit, dass eine Kombianlage tatsächlich einmal nach dem erfindungsgemässen Verfahren betrieben wird, ist an sich recht gering. Gleichwohl ist entscheidend, dass die Anlage für das erfindungsgemässe Betriebsverfahren vorbereitet ist, und die entsprechenden Programme in der Leittechnik implementiert sind, was, wie oben erwähnt, bereits erhebliche Geldflüsse generieren kann.

Bei dem erfindungsgemässen Verfahren ist von Vorteil, wenn im Wasser Dampf-Kreislauf möglichst viel Energie so gespeichert ist, dass sie kurzfristig in Form von Dampf für die Dampfturbine zur Verfügung gestellt werden kann. Vorteilhaft für das Verfahren ist daher, wenn die Gasturbine nach dem Anfahren auf Nenndrehzahl zunächst mit geöffnetem Netzschalter, aber geschlossenem Generatorschalter im Inselbetrieb zur Eigenversorgung des Kombikraftwerks betrieben wird. In dieser Zeit wird die Abgaswärme der Gasturbine verwendet, um den Wasser-Dampf-Kreislauf energetisch aufzuladen und in Betriebsbereitschaft zu versetzten. Mit Vorteil wird bereits jetzt die Dampfturbine angefahren. Der Netzschalter wird erst geschlossen, wenn der Wasser-Dampf-Kreislauf einen bestimmten Zustand erreicht hat. Erst dann muss das Kombikraftwerk die Leistungsanforderungen des Netzes erfüllen; nach dem erfindungsgemässen Verfahren sind der Wasser-Dampf Kreislauf und die Dampfturbine jetzt bereit, durch Zuleiten von Dampf zur Dampfturbine die Gasturbine bei der Erfüllung transienter Lastanforderungen zu unterstützen. Es ist weiterhin von Vorteil, wenn in dem Belastungsprogramm weitere Haltepunkte vorgesehen sind, bei denen der Wasser-Dampf-Kreislauf sukzessive weiter energetisch aufgeladen wird. Dadurch steigt die kurzfristig zur Verfügung zu stellende Leistung der Dampfturbine weiter an.

Der Wasser-Dampf-Kreislauf wird beim erfindungsgemässen Verfahren als Akkumulator für schnell in Form von heissem gespanntem Dampf zur Verfügung zu stellende thermische Energie betrieben.

Wenn die Kömbianlage mit einem Trommelkessel versehen ist, können eine Hochdrucktrommel und/oder eine Niederdrucktrommel als Energiespeicher Verwendurig finden. Bei einer Anlage zur Durchführung des Verfahrens können die Trommeln mit Vorteil als Energiespeicher überdimensioniert sein. In den Trommeln ist dann neben Dampf Sattwasser gespeichert. In einer bevorzugten. Verfahrensvariante, wobei bei einer Leistungsanforderung der Dampfturbine Dampf zugeführt werden muss und ein zwischen Kessel und Dampfturbine angeordnetes Hauptregelventil geöffnet wird, sinkt der Gegendruck im Kessel spontan um einen geringen Betrag. Das Sattwasser siedet, und ist so in der Lage, schnell grosse Dampfmengen zur Verfügung zu stellen.

In einer weiteren vorteilhaften Ausgestaltung des Verfahrens wird zumindest zeitweise Dampf aus dem Hochdruckteil des Dampferzeugers dem Niederdruckteil oder Mitteldruckteil der Dampfturbine zugeleitet. Hierzu wird entweder der Druck im Hochdruckteil des Dampferzeugers temporär reduziert, oder der Druck zwischen dem Dampferzeuger und der Dampfturbine gedrosselt. Ein Vorteil dieser Verfahrensvariante ist, dass die Dampffeuchte während der Entspannung in der Dampfturbine und niedriger Frischdampftemperatur bei niedriger Gasturbinenlast nicht zu stark ansteigt.

Der Dampfturbine kann selbstverständlich auch zusätzlich Dampf von einem Hilfskessel zugeführt werden.

Zusätzlich kann auch die Leistung eines Schwarzstartdiesels zur Kompensation von transienten Lastanforderungen herangezogen werden.

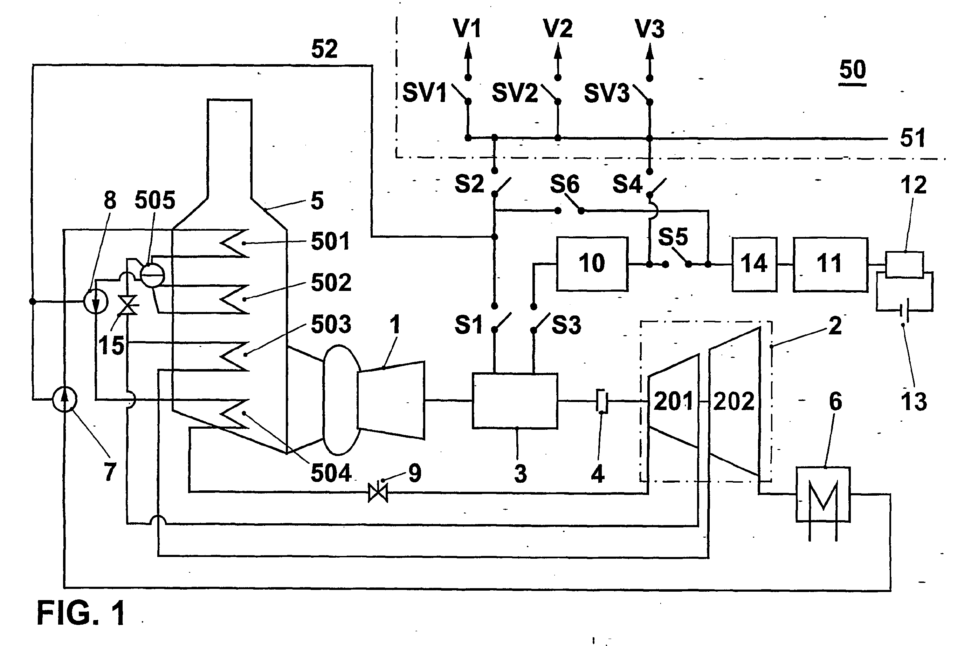

### Kurze Beschreibung der Zeichnung

Die Erfindung wird nachfolgend anhand der Zeichnung näher erläutert. Die einzige Figur zeigt ein Beispiel einer schwarzstartfähigen Kombianlage. Schaltungen eines Wasser-Dampf-Kreislaufes und elektrische Schaltungen sind stark schematisiert, und es sind nur die für das Verständnis der Erfindung unmittelbar notwendigen Elemente dargestellt. Die Figur ist lediglich instruktiv zu verstehen, und sie soll insbesondere nicht zur Eingrenzung des beanspruchten Schutzumfangs der Erfindung herangezogen werden.

### Weg zur Ausführung der Erfindung

In der Figur ist beispielhaft eine schwarzstartfähige Kombianlage dargestellt, anhand derer das erfindungsgemässe Verfahren nachfolgend verdeutlicht wird. Eine Gasturbine 1 und eine Dampfturbine 2 treiben einen gemeinsamen Generator 3 an. Dabei ist die Dampfturbine 2, die aus einem Hochdruckgehäuse 201 und einem Mittel-/Niederdruckgehäuse 202 besteht, auf an sich bekannte Weise über eine selbsttätig wirkende Kupplung 4 mit dem Generator 3 gekoppelt. Das Abgas der Gasturbine strömt durch einen Abhitzedampferzeuger 5, in welchem Dampf für die Dampfturbine erzeugt wird. Dabei wird Kondensat aus einem Kondensator 6 durch eine Nieder-/ Mitteldruck-Speisepumpe 7 auf ein erstes Druckniveau gebracht. Dieses Speisewasser durchströmt einen Speisewasservorwärmer 501, und strömt in eine Nieder-/ Mitteldrucktrommel 505 ein. Wasser aus der Nieder-/ Mitteldrucktrommel 505 zirkuliert durch einen Nieder-/ Mitteldruckverdampfer 502. In der Trommel 505 findet eine Trennung in Siedewasser und Sattdampf statt. Das Siedewasser zirkuliert zum Teil weiter durch den Nieder- / Mitteldruckverdampfer 502, wo jeweils ein Teil davon verdampft wird. Ein anderer Teilstrom des Siedewassers in der Trommel wird von einer Hochdruck-Speisepumpe 8 auf einen zweiten Druck gefördert. In einem Zwangsdurchlauf-Verdampfer 504 wird das Hochdruck-Speisewasser verdampft und der entstandene Dampf überhitzt. Der Hochdruckdampf strömt schliesslich über ein Dämpfregelventil 9 zum Einströmstutzen des Hochdruckgehäuses 201 der Dampfturbine 2, wo er unter Abgabe von Nutzleistung auf einen Druck entspannt wird, der näherungsweise dem ersten Druckniveau des Wasser-Dampf-Kreislaufes entspricht. Der in der Trommel abgeschiedene Sattdampf strömt aus der Trommel ab, und wird mit dem teilentspannten ersten Teilstrom vermischt, bevor er zu einem Nieder-/ Mittetdrucküberhitzer geleitet wird. Von dort wird der überhitzte Dampf zum Einströmstutzen des Nieder-/ Mitteldruckgehäuses 202 der Dampfturbine geleitet, und unter Abgabe von Nutzleistung auf den Kondensatordruck entspannt. Der entspannte Dampf wird schliesslich im Kondensator 6 wieder verflüssigt. Der oben beschriebene Wasser-Dampf-Kreislauf ist stark vereinfacht dargestellt. Ebenso könnte dieser in der Anzahl der Druckstufen, Vorwärmstufen, und der Verdampferbauarten anders aufgebaut sein, ohne das Wesen der Erfindung zu berühren. Der Nieder-/ Mitteldruckverdampfer könnte insbesondere als Zwangsdurchlaufverdampfer und -überhitzer ausgeführt sein. Der Kessel könnte auch mit einer Hochdrucktrommel ausgeführt sein. Eine Vielzahl weiterer Variationen sind dem Fachmann geläufig. Im Normalbetrieb der Anlage sind der Generatorschalter S1 und der Netzschalter S2 geschlossen, die Schalter S3 bis S6 sind geöffnet. Über den Netzschalter S2 ist die Kraftwerksanlage mit dem Stromnetz 50 verbunden. Dies ist im allgemeinen ein grosser Netzverbund, an dem eine Vielzahl weiterer Kraftwerke und eine Vielzahl Verbraucher V1, V2, V3, ... angeschlossen sind. welche über Schalter SV1, SV2, SV3, ... zu- und abgeschaltet werden. Im Ausführungsbeispiel ist angedeutet, dass das Kraftwerk über den Netzschalter S2 auf eine Hochspannungsschiene 51 aufgeschaltet ist, und eine Anzahl Verbraucher über Schalter auf diese Schiene aufschaltbar sind. Im Übrigen ist die elektrische Verschaltung sehr schematisch dargestellt; Transformatoren, . Schutzschalter, und weitere für das unmittelbare Verständnis der Erfindung nicht notwendige Elemente sind weggelassen. Ein leistungsstarkes Stromnetz ist im allgemeinen sehr insensitiv auf schwankende Leistungsanforderungen, und Kraftwerksanlagen, die unter Last laufen, verfügen von Haus aus über entsprechenden Reserven für Frequenzstützung.

Bei einem normalen Start der Kraftwerksanlage sind zunächst die Schalter S1, S2, S5 und S6 geöffnet. Der Schalter S4 wird geschlossen, und eine Anfahrvorrichtung 10, beispielsweise ein statischer Frequenzumrichter, wird auf die Hochspannungsschiene 51 aufgeschaltet. Über den Schalter S3 wird die' Anfahrvorrichtung 10 mit dem Generator 3 verbunden, der nunmehr motorisch betrieben wird, und die Gasturbine zunächst äuf Zünddrehzahl hochschleppt, und bis auf eine gewisse Drehzahl zur Unterstützung der Wellenbeschleunigung im Betrieb bleibt. Spätestens auf Nenndrehzahl der Gasturbine werden die Schalter S3 und S4 geöffnet, und die Gasturbine läuft im Leerlauf. Der Schalter S1 wird geschlossen, und über die Eigenversorgungsschiene 52 kann das Kraftwerk vom Generator versorgt werden, und die Anlage kann nun im Inselbetrieb, ohne externe Stromversorgung, laufen. Hier ist beispielsweise dargestellt, dass die Speisepumpen 7 und 8 an die Eigenversorgungsschiene 52 angeschlossen sind. In einem nächsten Schritt wird die Kraftwerksanlage mit dem Netz synchronisiert, und der Netzschalter S2 geschlossen. Die Leistung der Gasturbine wird zumindest in einem unteren Lastbereich gemäss einem vorgegebenen Lastprogramm gesteuert erhöht. Die Dampfturbine 2 wird angefahren; sobald sie auf Nenndrehzahl ist, wird sie über die selbsttätig wirkende Kupplung 4 auf den Generator aufgeschaltet. Das Dampfregelventil 9 erhöht die Dampfmenge langsam gemäss einem vorgegebenen Belastungsprogramm der Dampfturbine und/oder in Abhängigkeit gemessener Materialtemperaturen, um die mechanische Belastung der Dampfturbine durch thermische Spannungen zu begrenzen. Auf diese Weise wird die Kombianlage unabhängig von der Netzbelastung auf eine vorgegebene Zielleistung gefahren; die Frequenzstützung des Netzes 50 wird von anderen auf das Netz aufgeschalteten Anlagen übernommen.

Der Fall stellt sich grundsätzlich anders dar, wenn das Netz 50 energielos ist. In diesem Falle ist die Schwarzstartfähigkeit einer auf das Netz 50 aufschaltbaren' Anlage gefordert. Hierzu ist das beispielhaft dargestellte Kombikraftwerk mit einem Schwarzstartdiesel 11 ausgestattet. Die Schalter S1 bis S6 sind geöffnet. Der Schwarzstartdieset 11 wird mit einem Anlassermotor 12 gestartet, der von einer Batterie 13 versorgt wird. Der Schwarzstartdiesel 11 treibt einen Hilfsgenerator 14 an. Der Schalter S5 wird geschlossen, und die Anfahrvorrichtung 10 wird vom Hilfsgenerator 14 versorgt. Wie oben beschrieben, wird der Schalter S3 geschlossen, und die Gasturbine 1 auf Nenndrehzahl gebracht. Darauf werden die Schalter S3 und S5 geöffnet. Vor dem Anfahren der Gasturbine wird mittels des Schalters S6 der Hilfsgenerator 14 mit der Eigenversorgungsschiene 52 verbunden. Dies ermöglicht es, den Kessel in Startbereitschaft zu bringen. Dazu können die Speisepumpen 7 und 8 in Betrieb genommen werden. Sobald als möglich wird auch der Kondensator 6 evakuiert. Nachdem die Gasturbine ohne Last auf Nenndrehzahl ist, verbleibt der Schwarzstartdiesel 11 in einer bevorzugten Variante zunächst im Leerlauf, oder auf einer geringen Last, welche die notwendigsten Kraftwerkskomponenten mit elektrischer Energie versorgt. Der Generatorschalter S1 wird geschlossen, und der von der Gasturbine 1 angetriebene Generator 3 liefert die Leistung zur Eigenversorgung des Kraftwerks. Das Kraftwerk läuft nunmehr unabhängig von einer externen oder Hilfs-Energieversorgung autark im Inselbetrieb. Sofern noch nicht geschehen, werden jetzt die Speisepumpen 7 und 8 in Betrieb genommen, und der Kondensator 6 wird evakuiert. Im Inselbetrieb wird der Abhitzekessel 5 soweit als möglich aufgeheizt, und die Dampfproduktion wird angefahren. Die Dampfregelventile 9 und 15 sind geschlossen, oder stark angedrosselt. Wenn ein hinreichender Dampfzustand erreicht ist, wird die Dampfturbine auf Nenndrehzahl gefahren. Danach wird der Schalter S2 geschlossen, und das Kraftwerk wird mit Minimalleistung auf die Hochspannungsschiene 51 des Netzes 50 aufgeschaltet, und speist Strom in das bis dahin energielose Netz 50 ein. Die meisten der Verbraucherschalter SU1, SV2, SV3, ... sind geöffnet; dabei können die Verbraucher auch ganze Netzsegmente sein. Die Leistung des Kraftwerkes wird langsam erhöht. In diesem Masse müssen selbstverständlich Verbraucher aufgeschaltet werden, so, dass die Leistungsanforderung des Netzes wenigstens näherungsweise der Generatorleistung entspricht; auf geringe Abweichungen antwortet das System mit Schwankungen der Netzfrequenz, auf die das Kraftwerk mit Leistungsänderungen reagieren muss, um die Netzfrequenz in einem tolerablen Intervall zu halten. Die der Reihe nach aufgeschalteten Verbraucher V1, V2, V3, ... sind nicht infinitesimal, und insbesondere in der Anfangsphase der Netzbelastung relativ zur Gesamtleistung durchaus signifikant. In einem ersten Moment dämpfen die rotierenden trägen Massen des Kraftwerkes die Lastschwankungen, bevor diese durch eine Variation der Nutzleistungsabgabe der Turbinen ausgeregelt werden können. Nach dem bisherigen Stand der Technik greift die Leitungsregelung der Gasturbine ein, um bei Lastsprüngen eine Frequenzstützung durchzuführen. Wie einleitend erwähnt, ist dies bei modernen Gasturbinen zumindest in einem unteren Lastbereich bis beispielsweise 40 % oder 50 % relativer Gasturbinenlast nicht immer möglich; auch könnte die Lastanforderung in einen unzulässigen Bereich der Gasturbinenleistung fallen. Unter relativer Gasturbinenlast oder Gasturbinenleistung versteht der Fachmann im Übrigen das Verhältnis von der aktuell abgegebenen Nutzleistung der Gasturbine zu deren aktuellen Maximalleistung, welche stark von Umgebungsbedingungen und Betriebsparametern der Gasturbine abhängt. Erfindungsgemäss befindet sich die Dampfturbine mit geringer Leistung oder im Leerlauf auf Nenndrehzahl. Die Ventile 9 und 15 sind stark angedrosselt. Im Abhitzedampferzeuger 5 ist Energie in Form von heissem, unter Druck befindlichem Wasser und Dampf gespeichert. In einer bevorzugten Ausführungsform ist die Nieder-/ Mitteldrucktrommel 505 überdimensioniert, und fungiert als Zusatzspeicher für Siedewasser. Dies könnte prinzipiell auch mit einer Hochdrucktrommel gemacht werden; in der Praxis bereitet ein entsprechend grosser Hochdruckspeicher jedoch grössere Probleme, insbesondere hinsichtlich der Festigkeit. Durch ein Öffnen des Regelventils 15 kann die in der Trommel in Form von Siedewasser gespeicherte Energie genutzt werden: Durch den Abfall des Gegendrucks verdampft dieses Wasser, und der entstehende Sattdampf wird im Überhitzer 503 überhitzt und der Mittel-/ Niederdruckturbine zugeführt. Ebenso wird das Dampfregelventil 9 geöffnet, und die Leistungsabgabe der Hochdruck-Dampfturbine 201 steigt ebenfalls spontan an. Eine solche Verfahrensweise erzeugt zwar Thermoschocks und erhöht die Thermospannungen innerhalb der Dampfturbinenkomponenten, und verkürzt somit die Lebensdauer unter Umständen erheblich; dies kann aber durchaus toleriert werden, wenn das beschriebene Verfahren ein problemloses Anfahren eines energielosen Stromnetzes ohne die Gefahr von Notabschaltungen der Kraftwerkes aufgrund von Unter- oder Überfrequenz ermöglicht. Insofern ist es auch zu bevorzugen, wenn die Dampfturbine während des Anfahrens des Stromnetzes möglichst frühzeitig unter Last betrieben wird, damit die Leistungsregelung der Dampfturbine in beide Richtungen, also bei drohender Unterfrequenz wie auch drohender Überfrequenz, reagieren kann. Die Leistung der Gasturbine wird gesteuert gemäss eines vorgegebenen Belastungsprogrämms erhöht. Die Gasturbine reagiert während des Anfahrens zumindest in einem unteren Lastbereich nicht auf Lastschwankungen. Die Frequenzstützung, also der Ausgleich transienter Lastsprünge, wird auf beschriebene Weise von der Dampfturbine übernommen. Vorteilhaft ist es dabei, wenn das Belastungsprogramm der Gasturbine mehrere Haltepunkte beinhaltet, bei denen der Abhitzedampferzeuger als Energiespeicher weiter energetisch aufgeladen wird, was das kurzfristige Leistungspotenzial der Dampfturbine verbessert. In einer weiteren bevorzugten Verfahrensvariante wird der Schalter S6 geschlossen. Dann kann auch die Leistung des Schwarzstartdiesels zur Frequenzstützung herangezogen werden. Wenn die Gasturbinenleitung einen bestimmten Grenzwert erreicht hat - typisch sind Werte oberhalb rund 40% relative Leistung, bevorzugt grösser 50% relative Leistung - ist die Gasturbine in der Lage, auf kurzfristige Änderungen der Leistungsanforderung zu reagieren. In der Folge wir die Gasturbine nunmehr nicht mehr gesteuert belastet, sondern sie wird geregelt zur Frequenzstützung betrieben, und gegebenenfalls bis zu ihrer Maximalleistung weiterbelastet. Die Dampfturbine wird aus der Regelung herausgenommen, und langsam und unter Vermeidung von übermässigen Thermospannungen konventionell belastet, Die Lastverteilung zwischen Gasturbine und Dampfturbine erfolgt im Weiteren entsprechend einem spezifischen Anlagenbetriebskonzept. Weiterhin kann auch ein eventuell noch im Betrieb befindlicher Diesel abgestellt werden.

In einer vorteilhaften Verfahrensvariante kann vorgesehen werden, bei niedrigen Kesseltemperaturen Dampf aus dem Hochdruckteil 504 des Abhitzedampferzeugers dem Nieder-/Mitteldruckteil 202 der Dampfturbine zuzuführen, wozu besonders vorteilhaft der Druck, den die Hochdruckspeisepumpe 8 liefert, vorübergehend abgesenkt wird. Ein grosser Vorteil ist, dass die Dampffeuchte in der Dampfturbine bei niedriger Abgas- und damit Frischdampftemperatur nicht zu stark ansteigt. Die hierzu notwendigen Dampfleitungen und Drossel- bzw. Absperrorgane sind in der Figur aus Gründen der Übersichtlichkeit nicht eingezeichnet. Der Fachmann ist jedoch in Kenntnis der vorliegenden Beschreibung ohne Weiteres in der Lage, diese Variante der Erfindung in eine entsprechend aufgebaute Kombianlage umzusetzen.

Neben der speziellen Ausgestaltung im Ausführungsbeispiel ergeben sich für den Durchschnittsfachmann zwanglos eine ganze Reihe weiterer Anlagenbauformen, mit denen die Erfindung durchführbar ist; insbesondere stellt der dargestellte Wasser-Dampf-Kreislauf keine Einschränkung dar: Dem Fachmann ist eine Vielzahl von unterschiedlichen Ausführungsformen ohne Weiteres geläufig; hieraus ergeben sich im Rahmen des Erfindungsgedankens jeweils günstige Verfahrensvarianten, welche zwar nicht explizit beschrieben, die aber doch in der Erfindung, wie sie in den Ansprüchen gekennzeichnet ist, enthalten sind.

### Bezugszeichenliste

- 1: Gasturbine
- 2: Dampfturbine
- 3: Generator
- 4: selbsttätig wirkende Kupplung
- 5: Abhitzedampferzeuger
- 6-: Kondensator
- 7: Speisepumpe
- 8: Hochdruck-Speisepumpe
- 9: Dampfregelventil
- 10: Anfahrvorrichtung
- 11: Schwarzstartdiesel
- 12: Anlasser
- 13: Batterie
- 14: Hilfsgenerator
- 15: Dampfregelventil
- 50: Netz
- 51: Hochspannungsschiene
- 52: Eigeriversorgungsschiene
- 201: Hochdruckgehäuse
- 202: Nieder-/ Mitteldruckgehäuse
- 501: Speisewasservorwärmer
- 502: wieder-/ Mitteldruckverdampfer
- 504: Hochdruck-Verdampfer und -Überhitzer
- 505: Nieder-/ Mitteldrucktrommel
- S1: Generatorschalter
- S2: Netzschalter
- S3: Schalter
- S4: Schalter
- S5: Schalter
- S6: Schalter
- SV1: Verbraucherschalter
- SV2: Verbraucherschalter
- SV3: Verbraucherschalter
- V1: Verbraucher
- V2: Verbrauchers
- V3: Verbraucher

## Patentansprüche

1. Verfahren zum Betrieb eines Kombikraftwerks beim Anfahren eines energielosen Stromnetzes (50), wobei vor dem Belasten des Netzes ein Wasser-Dampf-Kreislauf aufgeheizt und eine Dampfturbine (2) angefahren wird, und wobei eine Gasturbine (1) wenigstens in einem Teil ihres Lastbereiches gemäss eines vorgegebenen Belastungsprogrammes belastet wird, **dadurch gekennzeichnet, dass** transiente Lastanforderungen des Netzes durch Veränderungen der Dampfturbinenleistung erfüllt werden.

2. Verfahren nach Anspruch 1, wobei die Gasturbine (1) vor dem Aufschalten auf das Netz für eine Zeitspanne im Leerlauf oder mit einer Leistung zur Eigenversorgung des Kombikraftwerks betrieben wird, und wobei während dieser Zeit der Wasser-Dampf-Kreislauf energetisch aufgeladen wird.

3. Verfahren nach einem der Ansprüche 1 oder 2, wobei im Belastungsprogramm der Gasturbine wenigstens ein Haltepunkt vorgesehen ist, bei dem der Wasser-Dampf-Kreislauf weiter energetisch aufgeladen wird.

4. Verfahren nach einem der Ansprüche 1 bis 3, bei welchem temporär Dampf aus dem Hochdruckteil (504) eines Abhitzedampferzeugers dem Nieder- und/oder Mitteldruckteil (202) der Dampfturbine (2) zugeleitet wird.

5. Verfahren nach einem der Ansprüche 1 bis 4, bei welchem Verfahren wenigstens eine Trommel (505) eines Abhitzedampferzeugers (5) als Dampf-Energiespeicher genutzt wird.

6. Verfahren nach einem der Ansprüche 1 bis 5, bei dem neben der Dampfturbinenteistung die Leistung eines Schwarzstartdiesels (11) zur Erfüllung transienter Lastanforderungen des Netzes herangezogen wird.

## Claims

1. Method for operating a combination power station when starting up an electrical grid system (50) without any energy, with a water/steam circuit being heated up and a steam turbine (2) being started before the grid system is loaded, and with a gas turbine (1) being loaded at least in a part of its load range in accordance with a predetermined load program, **characterized in that** transient load requirements in the grid system being satisfied by changes in the steam turbine power.

2. Method according to Claim 1, with the gas turbine (1) being operated for a time period on no load or at a power level for supplying the combination power station's own power supply requirements before being connected to the grid system, and with the water/steam circuit being charged with energy during this period.

3. Method according to one of Claims 1 or 2, with at least one holding point being provided in the load program for the gas turbine, at which the water/steam circuit is charged with further energy.

4. Method according to one of Claims 1 to 3, in which steam is temporarily supplied from the highpressure section (504) of a waste-heat steam generator to the low-pressure and/or medium-pressure section (202) of the steam turbine (2).

5. Method according to one of Claims 1 to 4, in which method at least one drum (505) of a waste-heat steam generator (5) is used as a steam energy store.

6. Method according to one of Claims 1 to 5, in which, in addition to the steam turbine power, the power of a black starting diesel (11) is used for covering transient load requirements in the grid system.

## Revendications

1. Procédé pour faire fonctionner une centrale combinée lors de la mise en route d'un réseau électrique sans énergie (50), un circuit eau-vapeur étant chauffé avant la sollicitation du réseau et une turbine à vapeur (2) étant mise en route, une turbine à gaz (1) étant sollicitée au moins dans une partie de sa plage de charge suivant un programme de sollicitation prédéterminé, **caractérisé en ce que** des exigences de charges transitoires du réseau sont satisfaites par des modifications de la puissance de la turbine à gaz.

2. Procédé selon la revendication 1, dans lequel la turbine à gaz (1) est mise en fonctionnement, avant la commutation sur le réseau, pendant un intervalle de temps en marche à vide, ou avec une puissance pour l'alimentation propre de la centrale combinée, et dans lequel, pendant ce temps, le circuit eau-vapeur est chargé énergétiquement.

3. Procédé selon l'une quelconque des revendications 1 ou 2, dans lequel, dans le programme de sollicitation de la turbine à gaz, il est prévu au moins un point de maintien, auquel le circuit eau-vapeur est davantage chargé énergétiquement.

4. Procédé selon l'une quelconque des revendications 1 à 3, dans lequel de la vapeur est acheminée temporairement hors de la partie haute pression (504) d'un générateur de vapeur à chaleur perdue à la partie basse pression et/ou moyenne pression (202) de la turbine à gaz (2).

5. Procédé selon l'une quelconque des revendications 1 à 4, dans lequel au moins un tambour (505) d'un générateur de vapeur à chaleur perdue (5) est utilisé en tant qu'accumulateur d'énergie à vapeur.

6. Procédé selon l'une quelconque des revendications 1 à 5, dans lequel, en plus de la puissance de la turbine à gaz, la puissance d'une unité diesel de démarrage à froid (11) est utilisée pour satisfaire aux exigences de charges transitoires du réseau.
